(19)

Europäisches Patentamt

European Patent Office

Office européen des brevets

(11) **EP 4 088 614 A1**

(12) **EUROPEAN PATENT APPLICATION**
published in accordance with Art. 153(4) EPC

(43) Date of publication:
**16.11.2022 Bulletin 2022/46**

(21) Application number: **22742791.1**

(22) Date of filing: **18.01.2022**

(51) International Patent Classification (IPC):
*A45D 29/00* (2006.01)    *A45D 31/00* (2006.01)
*C09D 175/04* (2006.01)    *C09J 7/22* (2018.01)
*B32B 7/12* (2006.01)    *B32B 27/08* (2006.01)

(86) International application number:
**PCT/KR2022/000881**

(87) International publication number:
**WO 2022/158815 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2021 KR 20210008964**

(71) Applicant: **Shin, Sung Min
Seoul 06013 (KR)**

(72) Inventors:
• **WOO, Soo Min
Anyang-si
Gyeonggi-do 13928 (KR)**
• **SHIN, Sung Min
Seoul 06013 (KR)**

(74) Representative: **BCKIP Part mbB
Siegfriedstraße 8
80803 München (DE)**

(54) **GEL NAIL STICKER, AND METHOD FOR MANUFACTURING SAME**

(57) The present disclosure provides a method for manufacturing a gel nail sticker including: forming an adhesive layer 20 by applying an adhesive on a first film layer 10; forming a base printing layer 30 having at least one color on the first film layer 10; forming a first gel layer 50 having flexibility on the base printing layer 30; and forming a second gel layer 60 by mixing a resin composition having a -NCO functional group with a coating solution containing a resin composition having an -OH functional group and a UV curable composition on the first gel layer 50, in which the forming of the second gel layer includes forming the second gel layer 60 including a urethane coating film having a urethane bond by causing a urethane reaction between the resin composition having the -OH functional group and the resin composition having the - NCO functional group.

[FIG. 1]

## Description

## BACKGROUND OF THE DISCLOSURE

Technical Field

The present disclosure relates to a gel nail sticker and a method for manufacturing the same.

Background Art

As one of the ways of expressing physical beauty that humans pursue, the beauty industry is being subdivided as the development is accelerating. In particular, with the rapid market expansion after the 20th century, the beauty industry began to become popular with the general public. Among the beauty industry, nail art is an essential element of expressive art for a body regardless of age or gender, and has been rapidly developed in recent years.

Originally, nail art, which is a field of beauty art, is one of the methods for beautifying the human body, and a length, shape, or color of artificial nails has been expressed by reflecting the changes and values of the culture of the times.

The conventional nail art mainly consists of applying pigments or the like such as nail polish of various colors to nails or toenails. However, the method of applying liquid pigments not only takes a long time to dry after applying the pigments, but causes inconvenience to users in pursuing various designs.

As another type of nail art, dry nail stickers have been developed to overcome the problems of liquid application such as nail polish or UV gel. However, the dry nail stickers are mostly films made of the same raw material as the nail polish, and have a problem in cutting and trimming the stickers to fit the size of the nail after attached. Even if the stickers are well trimmed and attached, there is a great discomfort due to the hard, heavy feeling of a foreign body.

There are also artificial nails that are highly durable. The artificial nails lack flexibility and elasticity. Accordingly, artificial nails have the disadvantage of deteriorating aesthetics because they do not naturally sit on the nails due to their low wearability and adhesion, and being completely removed from the nails.

Due to such a problem, UV gel nails, which are applied to nails or toenails, including a UV curing resin in pigment, and then forcibly cured using a UV lamp, have been in the spotlight in recent years.

The existing gel nail stickers become hard by being cured to cause a sense of foreign matter, scratches, and dents in real life when used, so they have low durability, and the existing gel nail stickers are hard and inflexible, so they are hard to attach to curved nails of the general public.

The prior registered patent (10-2024663 B1) includes a UV gel coating layer 26 formed by applying a UV gel coating solution, in which an oligomer, a monomer, and a short-wavelength initiator are mixed, to a color layer 24 and includes an LED gel coating layer 28 formed by applying an LED gel coating solution in which a monomer, an oligomer, a long-wavelength initiator, and cellulose are mixed.

However, the distinction between the short-wavelength initiator and the long-wavelength initiator is ambiguous, and both the initiators are cured by natural light, and thus, these two initiators have a problem in that their colors are changed or cured when exposed to natural light. In addition, even in the manufacturing process step, the UV gel coating layer 26 is affected in the step of partially curing the LED gel coating layer 28, so it is difficult to adjust the degree of curing.

When a coating film is formed by a reaction of mixing the cellulose, oligomer, and monomer, the LED gel coating layer 28 has disadvantages in that a reaction rate is slow, productivity is low, a bonding strength is weak, and there is little gloss.

## SUMMARY

Technical Problem

An aspect of the present disclosure provides a gel nail sticker in a semi-cured state that may be easily processed to fit a user's nail shape, and is natural and easy to use, and a method for manufacturing the same.

An another aspect of the present disclosure provides a method for manufacturing a gel nail sticker that is easy to attach because a gel layer including a urethane coating film in a semi-cured state is soft and has ductility, has hardness that a user may easily adjust through secondary UV curing, and has excellent gloss, and a gel nail sticker.

Still another aspect of the present disclosure is to provide a method for manufacturing a gel nail sticker that forms a double gel layer to control ductility through a first gel layer and maintains a second gel layer in a semi-cured state, and a gel nail sticker.

Technical Solution

According to various embodiments of the present disclosure, a method for manufacturing a gel nail sticker includes:

> forming an adhesive layer 20 by applying an adhesive on a first film layer 10;
> forming a base printing layer 30 having at least one color on the first film layer 10;
> forming a first gel layer 50 having flexibility on the base printing layer 30; and
> forming a second gel layer 60 on the first gel layer 50 by mixing a resin composition having a -NCO functional group with a coating solution containing a resin composition having an -OH functional group and a UV curable composition,

in which the forming of the second gel layer includes forming the second gel layer 60 including a urethane coating film having a urethane bond by causing a urethane reaction between the resin composition having the -OH functional group and the resin composition having the - NCO functional group.

In addition, the present disclosure provides a gel nail sticker manufactured through the method for manufacturing a gel nail sticker.

## ADVANTAGEOUS EFFECTS

According to the present invention, a method for manufacturing a gel nail sticker may enhance durability of the gel nail sticker, and the gel nail sticker manufactured through the method for manufacturing a gel nail sticker is quite flexible and soft and a surface of the gel nail sticker has a strength of a texture similar to that of a nail, so the gel nail sticker is easy to attach to curved nails (or toenails) of the general public, and the durability of the gel nail sticker is greatly improved.

In addition, according to the gel nail sticker of the present disclosure, a second gel layer in a semi-cured state has strong durability and has excellent gloss while having physical properties similar to nails.

In addition, the gel nail sticker may exhibit an antibacterial effect of inhibiting bacteria adhering to the outside by containing other antibacterial substances such as nano-antibacterial substances.

In addition, the gel nail sticker may have improved aesthetics through various patterns and light reflection of a plurality of design print layers.

In detail, the gel nail sticker may display a background color and a pattern through a base print layer having a color or a pattern, and may form a desired colorful pattern with foil paper, pearl, aluminum powder, cubic powder, and glitter powder patterns of a spot color printing layer through a last layer of a plurality of base printing layers and a layer before the last layer.

In addition, the gel nail sticker may control a shape of a randomly formed design layer by controlling a formation region or the like of a design layer through a base printing layer.

## BRIEF DESCRIPTION OF THE DRAWINGS

FIG. 1 is a diagram schematically illustrating a structure of a gel nail sticker manufactured by a method for manufacturing a gel nail sticker according to an embodiment of the present disclosure.
FIG. 2 is a diagram illustrating a method for manufacturing a gel nail sticker according to the embodiment of the present disclosure.
FIG. 3 is a diagram for describing a process of forming a powder printing layer during a process of manufacturing a gel nail sticker according to an embodiment of the present disclosure.

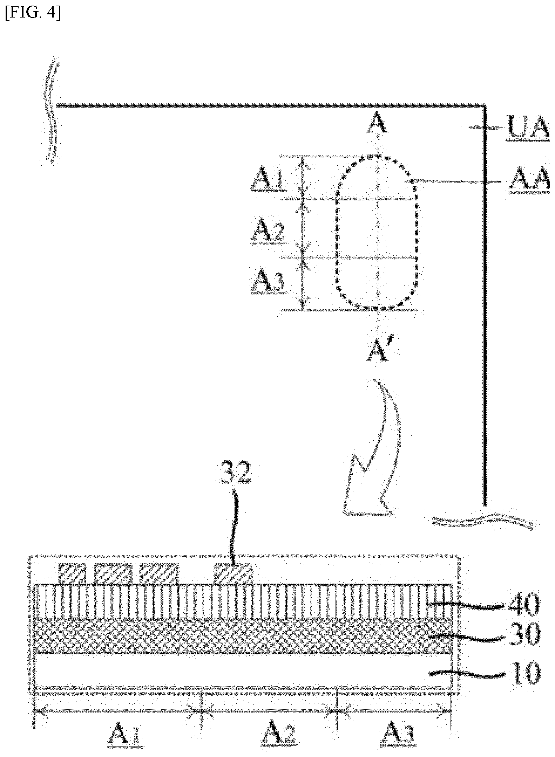

FIG. 4 is a diagram for describing a base printing layer before the powder printed layer is formed according to an embodiment of the present disclosure.
FIG. 5 is a diagram for describing a base printing layer before a powder printed layer is formed according to another embodiment of the present disclosure.
FIG. 6 is a conceptual diagram for describing a process of forming the powder printing layer according to a transfer process according to the embodiment of the present disclosure.
FIGS. 7A and 7B are diagrams illustrating examples of a surface shape of the gel nail sticker according to the embodiment of the present disclosure.
FIG. 8 is a diagram illustrating the gel nail sticker manufactured according to the embodiment of the present disclosure.
FIG. 9 is a cross-sectional view taken along D-D' of FIG. 8.

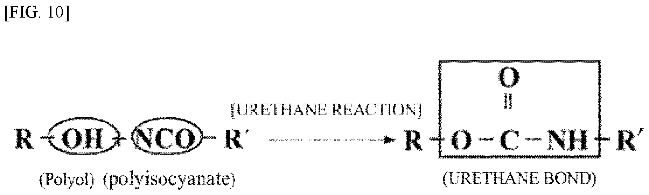

FIG. 10 is a diagram schematically illustrating a urethane reaction mechanism.

## DESCRIPTION OF EXEMPLARY EMBODIMENTS

Hereinafter, preferred embodiments of the present disclosure will be described with reference to the accompanying drawings. Objects, features, and advantages of the present disclosure may be more readily understood by referring to the accompanying drawings and the following detailed description. In addition, when it is decided that, in describing the present disclosure, a detailed description for the known configurations or functions may obscure the gist of the present disclosure, the detailed description therefor will be omitted.

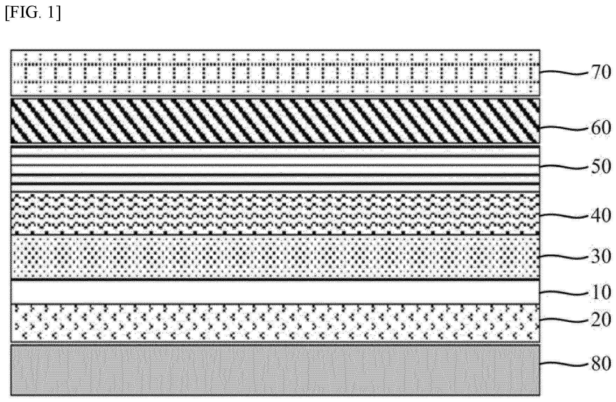

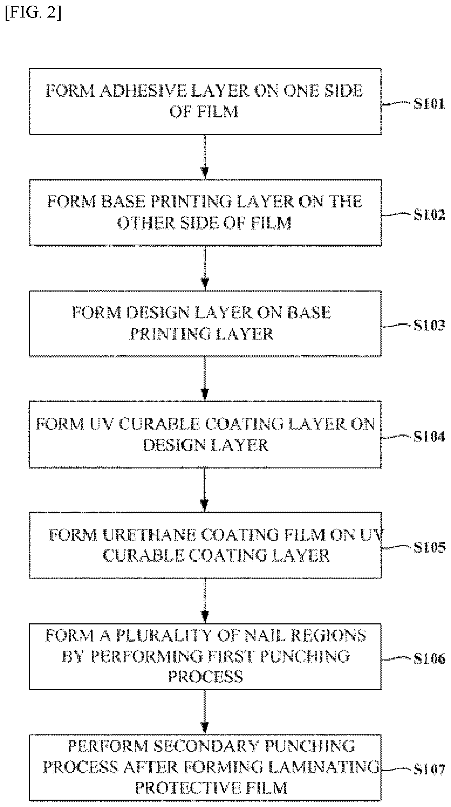

Referring to FIGS. 1 and 2, the present disclosure provides a method for manufacturing a gel nail sticker including the following steps:

a) forming an adhesive layer 20 by applying an adhesive on one side of a first film layer 10;

b) forming a base printing layer 30 having at least one color on the other side of the first film layer 10;

c) forming a design layer 40 including at least one of foil paper, spot color, glitter powder, pearl powder, aluminum powder, and cubic powder on the base print layer 30;

d) forming a first gel layer 50 having ductility by applying a UV curing solution on the design layer 40 and then UV curing the UV curing solution;
forming a second gel layer 60 in a semi-cured state on the first gel layer 50 by forming a coating film by mixing an isocyanate resin with a coating solution containing a resin composition having an -OH functional group and a UV curable composition to cause a urethane reaction between a resin having the -OH functional group and the isocyanate resin;

f) cutting the first film layer 10, the adhesive layer 20, the base print layer 30, the design layer 40, the first gel layer 50, and the second gel layer 60 into at least one gel nail sticker region by a first punching process; and

g) forming a second protective film layer 70 on the second gel layer 60 and cutting the at least one gel nail sticker region again by a second punching process.

Here, in step a), the first film layer 10 may be a transparent film layer, and is preferably a wide and transparent film, and may serve as a base for generating a plurality of gel nail stickers.

In step a), the adhesive layer 20 may be formed on the first film layer 10 to be attached to a nail.

The adhesive forming the adhesive layer 20 may be selected from the group consisting of vitamin B5, vitamin E, calcium, albumin, tocopheryl acetate, keratin, or eucalyptus.

In this case, when forming the adhesive layer 20, by implementing a plurality of air holes in the adhesive layer 20 to increase oxygen permeability to the adhesive layer through an air hole method, it is possible to implement a breathable feeling of attachment so as not to be stuffy after attached to a nail.

In detail, the adhesive layer 20 may implement an air hole by generating bubbles in the adhesive layer 20 using a porous silica air gel raw material.

In the step b), the base printing layer 30 having at least one color may be formed on the first film layer by ink printing.

For example, in the step b), a color or a pattern is printed on the other side of the first film layer, and may preferably be formed on the urethane film layer 10 through offset printing, inkjet digital printing, gravure printing, silk screen, and flexographic printing.

In the step c), the design layer 40 including at least one of foil paper, spot color, glitter powder, pearl powder, aluminum powder, and cubic powder may be formed on the base print layer 30.

In detail, the design layer 40 may include at least one of a spot color printing layer including foil paper or spot color, or a powder printing layer including at least one of glitter powder, pearl powder, aluminum powder, and cubic powder.

To this end, the spot color printing layer of step c) may be formed through a transfer process or silk screen printing. Here, the transfer process refers to an operation of increasing the durability and visual effect of prints by coating the PET film the on the print with adhesive glue.

In addition, the powder printing layer in the step c) may be formed by mixing aluminum powder, pearl powder, glitter powder or/and foil paper with ink, passing the mixture through a silk screen net, and printing the mixture.

In the step d), the first gel layer 50 having ductility may be formed on the design layer 40 by UV curing the UV curing solution.

The first gel layer 50 in the step d) may be formed by applying the UV curing solution on the design layer 40 or the base printing layer 30 and then performing the UV curing by irradiating UV light. In the process of manufacturing the first gel layer 50, the manufacturing time is very fast and the swelling of the coating film is high, so it is possible to easily control the thickness.

The thickness of the first gel layer 50 is preferably 5 to 350 $\mu$m to maintain a soft touch. In addition, since the thickness of the first gel layer 50 may more preferably be about 100 to 250 $\mu$m, a plurality of first gel layers 50 are formed by applying a plurality of UV curing solutions and UV curing processes.

In the step e), the second gel layer 60 in the semi-cured state is formed on the first gel layer 50 by forming a coating film by mixing an isocyanate resin with a coating solution containing a resin composition having a -OH functional group and a UV curable composition to cause a urethane reaction between the resin having the -OH functional group and the isocyanate resin.

In detail, in the step e), the isocyanate having the -NCO functional group is mixed with a coating solution containing a UV curable composition composed of a monomer, a solvent, and a UV light curable initiator based on a composition having a -OH functional group as a main base, and the mixture is applied on the first gel layer 50 and thermally dried to cause the urethane reaction so as to form the urethane coating film, thereby forming the second gel layer 60.

Here, the monomer may include at least any one of caprolactone acrylate, isobormyl acrylate, phenol (EO) acrylate, tetrahydrofufuryl acrylate, cyclic trimethylopropane formal acrylate, and ethoxy ethoxy acrylate as a monofunctional group, 1,6-hexanediol diacrylate and tripropylene glycol diacrylate as a bifunctional group, trimethylolpropane triacrylate and pentaerylthrito triacrylate as a trifunctional group, and pentaerylthritol tetraacrylate and dipentaerylthritol hexaacrylate as a multifunctional group.

In addition, the solvent may include at least any one of PMA, cyclohexanone, aromatic 100, aromatic 150, and dibasic ester which allow for easy silk screen printing.

In addition, the UV photoinitiator may be configured to include at least any one of hydroxy cyclohexyl phenyl ketone, hydroxy dimethyl acetophenone, methyl-[4 methylthio phenyl]-2-morpholine propanone, and 2,4,6-trimethylbenzol-diphenyl phosphine.

In an embodiment, the coating solution may be ink formed by mixing a composition having a -OH functional group with a UV curable composition based on at least one component of an acrylic polyol resin, a polyester polyol resin, a polyether polyol resin, and an epoxy polyol resin containing a solvent composed of a monomer and a solvent.

In the step e), a polyisocyanate resin containing at least one of aromatic diisocyanate and aliphatic diisocyanate having a -NCO functional group may be mixed with the ink thus configured and a coating solution may be applied as a coating film on the first gel layer 50 by silk screen printing.

In the step e), the coating film formed by the silk screen printing may be dried at 30 to 120°C for 5 to 80 minutes to cause a urethane reaction, thereby forming a urethane coating film.

More preferably, in the step e), the coating film formed by the silk screen printing may be dried at 60 to 90°C for 10 to 40 minutes to cause the urethane reaction, thereby forming a urethane coating film in a semi-cured state.

That is, when the heat drying time increases, the degree of urethane reaction of the composition may increase and thus the composition may be gradually cured.

In addition, in the embodiment, since the monomer is in a non-reacted state, the second gel layer 60 may maintain a semi-cured state.

The generated second gel layer 60 in a semi-hardened state has no stickiness, and therefore, is easy to process, and when attached to the nail, the second gel layer 60 may be easily trimmed according to the shape of the nail and may be maintained soft.

In detail, the gel nail sticker including the second gel layer 60 in the semi-hardened state according to primary thermal drying may be maintained soft to be easily trimmed according to the shape of the nail when attached to the user's nail.

In addition, when the user secondarily cures the monomer of the gel nail sticker with a UV lamp, a secondary radical crosslinking reaction is performed to maintain high gloss and hardness similar to nails. Therefore, the user has the advantage of being able to easily control the gloss, hardness, and ductility of the urethane coating film in the semi-cured state by adjusting the light irradiation time and light intensity of the UV lamp to adjust the degree of secondary curing.

In addition, the urethane reaction through the mixing of the compositions and the thermal drying method as described above is fast, and thus, good productivity is obtained. The second gel layer 60 in the semi-cured state has a strong bonding strength, so the coating film is not broken, the hardness is easy to control, and the impact resistance, abrasion resistance, water resistance, weather resistance, chemical resistance, and adhesion are excellent.

In addition, the second gel layer 60 in the semi-cured state formed as described above has strong durability and excellent luster while having physical properties similar to nails.

In the step f), the adhesive layer 20, the base print layer 30, the design layer 40, the first gel layer 50, and the second gel layer 60 formed on the first film layer 10 are cut by the punching process.

In the step f), the first film layer 10, the adhesive layer 20, the base print layer 30, the design layer 40, the first gel layer 50, and the second gel layer 60 may be cut into at least one gel nail sticker region by a first punching process.

The cutting in the step f) may be performed by removing an adhesive sheet other than a product after the adhesive sheet coating and a Thompson cutting operation.

The step g) may include forming a second protective film layer 70 on the second gel layer 60 and cutting the at least one gel nail sticker region again by a second punching process.

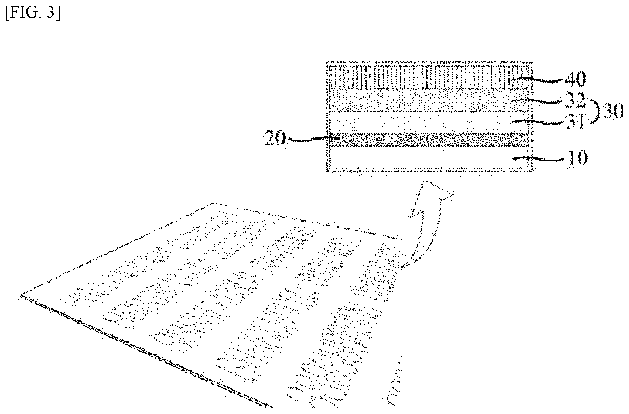

Meanwhile, in the step b), in detail, referring to FIG. 3, after the adhesive layer 20 is formed under the first film layer 10 on which a plurality of gel nail stickers are formed, the base printing layer 30 may be formed.

In the embodiment, since the base printing layer 30 is formed by the ink printing, it is possible to form a gel nail having a design of various colors and shapes.

In detail, the base print layer 30 may include a first base layer for indicating the overall background color of the gel nail sticker.

In addition, the first base layer may include a layer having a pattern that may be formed by the printing.

In addition, the base printing layer 30 may include a second base layer for determining an adhesion region of the design layer 40.

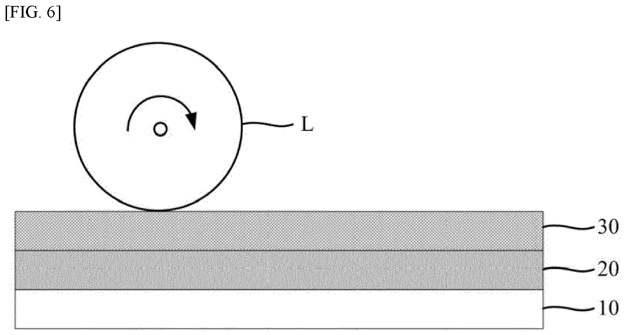

The design layer 40 may be randomly attached to the base printing layer 30 by rolling a roller while applying heat to the foil paper as illustrated in FIG. 6, and may be formed in a random shape.

However, when the design layer 40 is randomly formed, too much or too little foil paper is formed, so a difference in esthetics or shapes for each gel nail sticker may be too great.

In order to prevent this, the base printing layer 30 may control the degree of adhesion of the foil paper through the second base layer having adhesion to the foil paper or, conversely, not having an adhesion.

In addition, the design layer 40 may be omitted when sufficient design effect can be expressed only with the color of the base printing layer 30 in some cases.

In an embodiment, the UV curing printing layer 50 may include ink having adhesion to the foil paper, and may be formed to divide an effective region where the gel nail sticker is to be formed into at least two regions, have a relatively large area in a specific region, and have a relatively low region in other regions.

In this case, the second UV base layer may be randomly formed using a Gaussian function or may be formed to have a specific shape.

For example, referring to FIG. 3, the second base layer 32 may have an effective region AA divided into a first region A1, a second region A2, and a third region A3 from a top side, and may be formed to have a first are with respect to the first region A1 and have a second area smaller than the first area with respect to the second region A2, and the second base layer 32 may not be formed in the third region A3.

When the design layer 40 is transferred to the second base layer 32 formed in this way, the probability that the foil paper adheres to the second base layer 32 having relatively high adhesion increases, and the probability that the foil paper adheres to the first base layer 31 on which the second base layer 32 is not formed decreases, so it is possible to control the ratio, shape, and the like of the foil paper attached to the first region A1 to the third region A3 within the effective region AA, respectively.

Meanwhile, when the base printing layer 30 is formed with a plurality of base layers in this way, a step is generated on a nail, and the foil paper or powder is attached to the second base layer 32 to further generate a step, so problems such as generation of air bubbles between the design layer 40 and the UV curing printing layer 50 may occur.

To prevent this, in another embodiment, the first base layer 31 and the second base layer 32 may be formed of the same layer.

In this case, the first base layer 31 and the second base layer 32 may be simultaneously formed through pattern printing.

That is, the first base layer 31 and the second base layer 32 may be formed by patternprinting the first ink and the second ink, which has adhesive strength to the first ink, and includes an adhesive ink that is the same as or similar to the shape of the first ink, in different regions at the same time.

In this case, the first base layer 31 and the second base layer 32 do not have a step and form the same upper surface, and thus, the upper surface of the first base layer 31 has low adhesion and the second base layer 32 has low adhesion, so it is possible to form the design layer 40 more effectively than in the above-described embodiment.

In addition, since the second base layer 32 is printed only on the effective region AA where the gel nail sticker is formed and is not printed on a non-effective region UA where the gel nail sticker is not formed, so it is also possible to prevent expensive foil paper from adhering to the non-effective region UA.

In another embodiment, the second base layer 32 may be formed of ink having nonadhesion to the foil paper, and the first base layer 31 may be formed of an ink having adhesion to the foil paper.

When formed in this way, the probability that the foil paper is not formed on the second base layer 32, and the foil paper is formed on the first base layer 31 may be relatively very high. That is, in another embodiment, a spot color printing layer may be formed to have a specific shape while reducing randomness in attaching the foil paper.

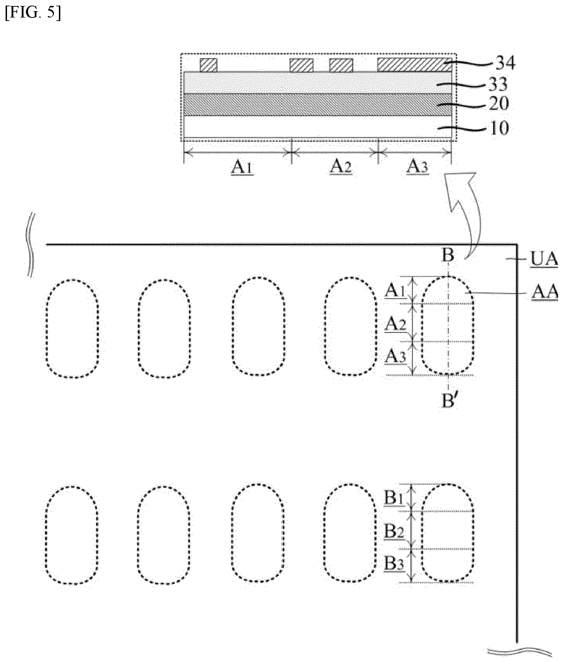

For example, referring to FIG. 5, the first effective region AA arranged in a first column may be divided into the first region A1, the second region A2, and the third region A3 from the top side, the second base layer 32 may be formed to have the third region with respect to the first region A1, the second base layer 32 may be formed to have a fourth area smaller than the third area with respect to the second region A2, and the second base layer 32 may be formed in the entire of the third region A3.

When the foil paper is transferred onto the second base layer 32 formed in this way, the probability that the foil paper is adhered to the first base layer 31 having adhesion increases, and the foil paper may not be attached to the region where the second base layer 32 is formed.

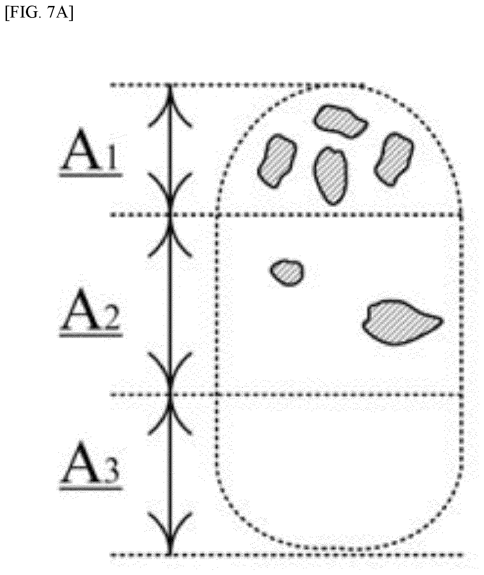

Accordingly, referring to FIG. 7A, it is possible to form the design layer 40 in which a relatively large amount of foil paper is formed in the first region A1, a relatively small amount of foil paper is formed in the second region A2, and no foil paper is not formed in the third region A3.

In this case, the base print layer 30 may be formed differently for each effective region AA where the gel nail sticker is to be formed, so that each gel nail sticker may have various design layers 40.

In detail, referring to FIG. 3, the gel nail stickers are manufactured as a set having a plurality of gel nail stickers according to the punching process, and the shape of the gel nail stickers is different for each set or within each set, so that the gel nail stickers have various esthetics may be manufactured.

For example, referring to FIG. 5, unlike the first effective region in the first column, when the second effective region in a second column is divided into a first region B1, a second region B2, and a third region B3 from the top side, the second base layer 32 may be formed in the entire of the first region B1, the second base layer 32 having the fifth area may be formed in the second region B2, and the second base layer 32 having a sixth area relatively smaller than the fifth area may be formed on the third region B3.

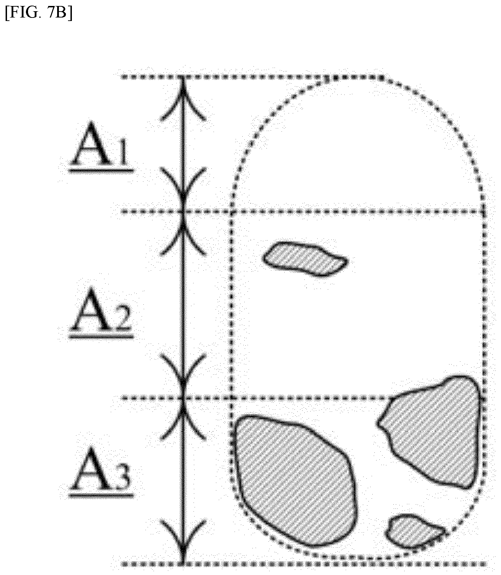

That is, as illustrated in FIG. 7B, the design layer in which the foil paper is not formed in the first region A1, a relatively small amount of foil paper is formed in the second region A2, and a relatively large amount of foil paper is formed in the third region A3 may be manufactured.

When formed in this way, the gel nail sticker of the first effective region AA and the gel nail sticker of the second effective region AA may be formed to have different design layer 40 shapes, so that it is possible to manufacture gel nail stickers having various shapes within one set.

In addition, in another embodiment, the second base layer 32 may be printed on the entire of the non-effective area UA where the gel nail sticker is not formed, thereby preventing expensive foil paper from adhering to the non-effective area UA.

That is, the base printing layer 30 may serve as adhesive glue for adhering the foil paper in step c).

In addition, the second gel layer 60 in the step g) may be formed by being applied only on the gel nail sticker (for example, effective region) as the removed product.

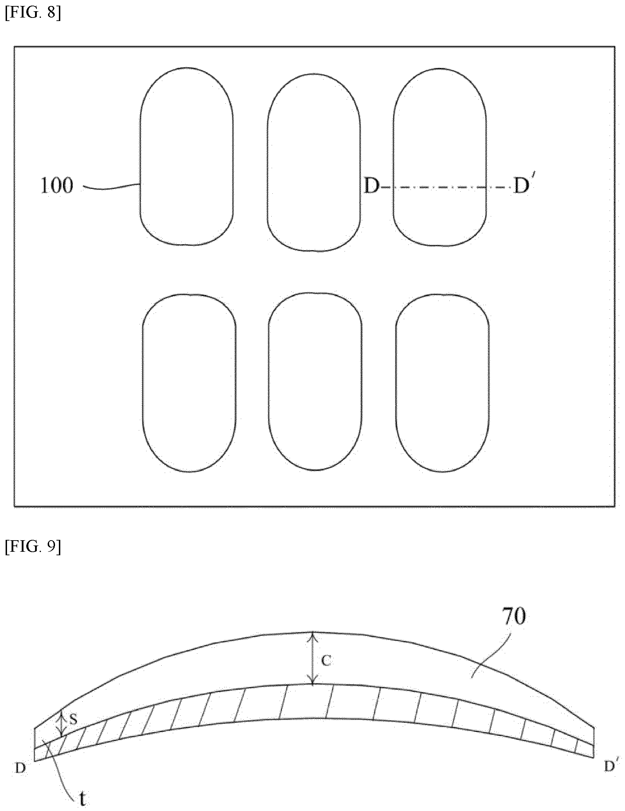

Referring to FIG. 8, each set may be formed separately, and a process of forming the second gel layer 60 on each gel nail sticker of the set may be performed.

In this case, as the second gel layer 60 is formed in each of the separated effective regions AA, the gel nail sticker may be formed in a form more suitable for a nail.

In detail, referring to FIG. 9, the second gel layer 60 may be formed so that the thickness of the second gel layer 60 decreases from a center c to a side s of the gel nail stickers 10 to 60.

That is, by controlling the thickness of the second gel layer 60, the curvature of the gel nail sticker increases from the center c to the side s of the gel nail sticker to more fit a shape of a person's nail, thereby more improving the esthetics of the gel nail sticker more.

In addition, referring to FIG. 9, a tail part t of the second gel layer 60 may be formed so that the second gel layer 60 protrudes from both ends of the gel nail sticker. Such a tail part (t) may assist in naturally attaching a perimeter of the gel nail sticker to a nail while increasing the adhesion to the nail.

That is, the tail part t of the flexible and transparent second gel layer 60 is deformed and cured according to the shape of the nail when cured on the nail, so the perimeter of the gel nail sticker may be naturally connected around the nail.

To this end, the step e) may be performed multiple times to form the second gel layer 60, and when the step e) may be performed multiple times, the urethane coating film may be formed to protrude while the formation region of the urethane coating film is reduced.

That is, the process of forming the first urethane coating film in the first region corresponding to the nail primarily, the process of forming a second urethane coating film in the second region reduced by a predetermined peripheral region than the first region, etc., are repeated, so the urethane coating film may be formed to protrude toward the center c.

In addition, the present disclosure provides a gel nail sticker manufactured through a method for manufacturing a gel nail sticker.

In addition, the present disclosure provides a gel nail sticker including:

a first film layer 10:

an adhesive layer 20 on one side of the first film layer 10;

a base printing layer 30 having at least one color on the other side of the first film layer 10;

a design layer 40 for expressing primary aesthetics;

a first gel layer 50 having ductility for expressing secondary aesthetics; and

a urethane coating film in a semi-cured state formed by a urethane reaction.

The urethane coating film may have a semi-cured state by curing only a portion of the coating solution through a primary urethane reaction with isocyanate.

In addition, the second gel layer 60 may include a urethane coating film in a semi-cured state and a UV light curing initiator due to a monomer.

The urethane coating film in the semi-cured state may be easily attached to user's nails in a double curing method by performing a secondary UV curing reaction through secondary LED UV curing by the user, and may exhibit a beautiful gloss.

[Equation 1]

$$R \times r/17 = R' \times r'/42$$

R: Content of polyol resin

R': Content of polyisocyanate resin

r: Content ratio of - OH group of polyol resin

r': Content ratio of - NCO group of polyisocyanate resin

In this case, the urethane coating film needs to be mixed in an equivalent ratio of the above Equation 1 so that the ratio of the isocyanate and the coating solution may be reacted by equivalent to equivalent in order to be manufactured in a semi-solid.

The thermosetting composition of the coating solution constituting the urethane coating film is completely bonded by the urethane reaction by the isocyanate, but the hardness and durability can be strengthened by preventing complete hardening by the monomer and then performing the LED UV curing by the user.

The urethane coating film prevents the occurrence of deformation, scratches, and dents of the gel nail sticker, and imparts the flexibility to the sticker, thereby achieving the easy attachment to the user's curved nail and preventing the phenomenon of detachment from the nail.

The adhesive agent in contact with the side surface of the nail may include a nutritional enhancing component and an antibacterial component for nail health, and the nutritional component may be preferably selected from the group consisting of vitamin B5, vitamin E, calcium, albumin, tocopheryl acetate, keratin, or eucalyptus.

The gel nail sticker may have a modulus value of 1 to 50 in order to implement elastic force to enhance adhesion to the curved surface of the nail by implementing a chewy and soft texture and to provide a fitting force suitable for the shape of the tip of the nail.

The thickness of the finished gel nail sticker is preferably 200 to 500 $\mu$m, and the lowest thickness from the cuticle line to the center of the nail is 200 $\mu$m and the highest thickness thereof is 500 $\mu$m to fit the curve of the nail.

The high point of the nail is realized by adjusting the thickness of the gel nail sticker. The process of realizing the thick feeling is possible both by a method for mechanically using a pressure tube and a hand squeezing method.

Hereinabove, a specific embodiment of the present disclosure has been described above. However, it will be understood by those of ordinary skill in the art to which the present disclosure pertains that the present disclosure can be variously modified and changed without changing the gist of the present disclosure.

Therefore, since the embodiments described above are provided to completely inform the scope of the present disclosure to those with ordinary skill in the technical field to which the present disclosure pertains, it should be understood that the embodiments are exemplary and not limited in all respects, and the present disclosure is only defined by the scope of the claims.

**INDUSTRIAL AVAILABILITY**

Since the present disclosure relates to a method for manufacturing a gel nail sticker and a gel nail sticker manufactured by the method, the present invention has potential for industrial applicability.

**Claims**

1. A method for manufacturing a gel nail sticker, comprising:

    forming an adhesive layer (20) by applying an adhesive on a first film layer (10);
    forming a base printing layer (30) having at least one color on the first film layer (10);
    forming a first gel layer (50) having flexibility on the base printing layer (30); and
    forming a second gel layer (60) on the first gel layer (50) by mixing a resin composition having a -NCO functional group with a coating solution containing a resin composition having an -OH functional group and a UV curable composition, wherein the forming of the second gel layer includes forming the second gel layer (60) including a urethane coating film having a urethane bond by causing a urethane reaction between the resin composition having the -OH functional group and the resin composition having the -NCO functional group.

2. The method of claim 1, wherein the forming of the second gel layer includes forming a coating film on the first gel layer (50) by printing an ink formed by mixing a polyisocyanate resin with a coating solution that contains the resin composition having the

    - OH functional group, a solvent composed of a monomer and a solvent, and the UV curable composition.

3. The method of claim 2, wherein the forming of the second gel layer includes forming a urethane coating film in a semi-cured state having a urethane bond by thermally drying a coating film to cause a urethane reaction.

4. The method of claim 2, wherein the coating solution includes at least one of acrylic polyol, epoxy polyol, polyester polyol, and polyether polyol resins.

5. The method of claim 4, wherein the polyisocyanate resin is a polyisocyanate resin containing at least one of aromatic diisocyanate and aliphatic diisocyanate.

6. The method of claim 3, wherein the forming of the urethane coating film in a semi-cured state having the urethane bond by thermally drying the coating film to cause the urethane reaction includes forming a solid thermosetting urethane coating film by drying the coating film at 30 to 120° C for 5 to 80 minutes to cause the urethane reaction.

7. The method of claim 1, further comprising:
forming a design layer (40) including at least one of foil paper, spot color, glitter powder, pearl powder, aluminum powder, and cubic powder between the base print layer (30) and the first gel layer (50).

8. A gel nail sticker, comprising:

    a first film layer (10);
    an adhesive layer (20) on the first film layer (10);
    a base printing layer (30) having the at least one color on the first film layer (10);
    a first gel layer (50) formed on the base printing layer (30) so as to have ductility; and
    a second gel layer (60) in a semi-cured state formed on the first gel layer (50) by a urethane reaction and including a urethane coating film having a urethane bond, a monomer, and a UV photoinitiator.

9. The gel nail sticker of claim 8, wherein the urethane coating film has a urethane bond formed by thermally drying a resin composition having a -OH functional group and a resin composition having a -NCO functional group to cause a urethane reaction.

**10.** The gel nail sticker of claim 9, wherein the resin composition having the -NCO functional group is a polyisocyanate resin.

[FIG. 1]

[FIG. 2]

```
┌─────────────────────────────────────┐
│     FORM ADHESIVE LAYER ON ONE SIDE  │──── S101
│              OF FILM                 │
└─────────────────────────────────────┘
                  │
                  ▼
┌─────────────────────────────────────┐
│    FORM BASE PRINTING LAYER ON THE   │──── S102
│          OTHER SIDE OF FILM          │
└─────────────────────────────────────┘
                  │
                  ▼
┌─────────────────────────────────────┐
│        FORM DESIGN LAYER ON BASE     │──── S103
│              PRINTING LAYER          │
└─────────────────────────────────────┘
                  │
                  ▼
┌─────────────────────────────────────┐
│   FORM UV CURABLE COATING LAYER ON   │──── S104
│              DESIGN LAYER            │
└─────────────────────────────────────┘
                  │
                  ▼
┌─────────────────────────────────────┐
│  FORM URETHANE COATING FILM ON UV    │──── S105
│          CURABLE COATING LAYER       │
└─────────────────────────────────────┘
                  │
                  ▼
┌─────────────────────────────────────┐
│   FORM A PLURALITY OF NAIL REGIONS   │──── S106
│    BY PERFORMING FIRST PUNCHING      │
│              PROCESS                 │
└─────────────────────────────────────┘
                  │
                  ▼
┌─────────────────────────────────────┐
│     PERFORM SECONDARY PUNCHING       │──── S107
│  PROCESS AFTER FORMING LAMINATING    │
│          PROTECTIVE FILM             │
└─────────────────────────────────────┘
```

[FIG. 3]

[FIG. 4]

[FIG. 5]

[FIG. 6]

[FIG. 7A]

[FIG. 7B]

[FIG. 8]

[FIG. 9]

[FIG. 10]

R—OH + NCO—R′  [URETHANE REACTION]  ········▶  R—O—C—NH—R′

(Polyol) (polyisocyanate)  (URETHANE BOND)

<div align="center">

**INTERNATIONAL SEARCH REPORT**

</div>

| International application No. |
|---|
| **PCT/KR2022/000881** |

**A.     CLASSIFICATION OF SUBJECT MATTER**

**A45D 29/00**(2006.01)i; **A45D 31/00**(2006.01)i; **C09D 175/04**(2006.01)i; **C09J 7/22**(2018.01)i; **B32B 7/12**(2006.01)i; **B32B 27/08**(2006.01)i

According to International Patent Classification (IPC) or to both national classification and IPC

**B.     FIELDS SEARCHED**

Minimum documentation searched (classification system followed by classification symbols)

A45D 29/00(2006.01); A61K 8/81(2006.01); A61K 8/84(2006.01); A61K 8/87(2006.01); A61Q 3/00(2006.01); A61Q 3/02(2006.01); B32B 37/02(2006.01); B32B 37/10(2006.01); B32B 7/12(2006.01); C08F 290/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 젤 네일(gel nail), 우레탄(urethane), 반경화(semi-cured), 열경화(thermal curing), 광경화(photocuring)

**C.     DOCUMENTS CONSIDERED TO BE RELEVANT**

| Category* | Citation of document, with indication, where appropriate, of the relevant passages | Relevant to claim No. |
|---|---|---|
| Y | KR 10-1882174 B1 (CONTROL CO., LTD. et al.) 30 July 2018 (2018-07-30)<br>See claim 1; paragraphs [0029]-[0031]; and figure 1. | 1-10 |
| Y | JP 2020-055771 A (SAKURA COLOR PRODUCTS CORP.) 09 April 2020 (2020-04-09)<br>See paragraphs [0013]-[0041]. | 1-10 |
| A | JP 2015-520242 A (MYCONE DENTAL SUPPLY COMPANY, INC.) 16 July 2015 (2015-07-16)<br>See entire document. | 1-10 |
| A | JP 2016-065000 A (HITACHI CHEMICAL CO., LTD.) 28 April 2016 (2016-04-28)<br>See entire document. | 1-10 |
| A | JP 2013-043853 A (JUJO CHEMICAL KK) 04 March 2013 (2013-03-04)<br>See entire document. | 1-10 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 April 2022** | **22 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2022/000881** |

| C. | DOCUMENTS CONSIDERED TO BE RELEVANT | |
| --- | --- | --- |
| Category* | Citation of document, with indication, where appropriate, of the relevant passages | Relevant to claim No. |
| PX | KR 10-2266629 B1 (SIN, Sung Min et al.) 18 June 2021 (2021-06-18)<br>See entire document.<br>*This document is the published patent of an earlier application that serves as a basis for claiming priority of the present international application. | 1-10 |

Form PCT/ISA/210 (second sheet) (July 2019)

INTERNATIONAL SEARCH REPORT
Information on patent family members

International application No.

**PCT/KR2022/000881**

| Patent document cited in search report | | | Publication date (day/month/year) | Patent family member(s) | | | Publication date (day/month/year) |
|---|---|---|---|---|---|---|---|
| KR | 10-1882174 | B1 | 30 July 2018 | WO | 2019-074321 | A1 | 18 April 2019 |
| JP | 2020-055771 | A | 09 April 2020 | None | | | |
| JP | 2015-520242 | A | 16 July 2015 | CN | 104470495 | A | 25 March 2015 |
| | | | | CN | 108743454 | A | 06 November 2018 |
| | | | | EP | 2863883 | A1 | 29 April 2015 |
| | | | | EP | 2863883 | A4 | 16 March 2016 |
| | | | | EP | 3449905 | A1 | 06 March 2019 |
| | | | | JP | 2016-520242 | A5 | 12 August 2016 |
| | | | | KR | 10-2015-0028995 | A | 17 March 2015 |
| | | | | US | 2015-0335568 | A1 | 26 November 2015 |
| | | | | WO | 2013-192515 | A1 | 27 December 2013 |
| JP | 2016-065000 | A | 28 April 2016 | None | | | |
| JP | 2013-043853 | A | 04 March 2013 | JP | 4981184 | B1 | 18 July 2012 |
| KR | 10-2266629 | B1 | 18 June 2021 | None | | | |

Form PCT/ISA/210 (patent family annex) (July 2019)

**EP 4 088 614 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 102024663 B1